# EUROPÄISCHE PATENTSCHRIFT

(11) **EP 2 209 998 B1**
(45) Veröffentlichungstag und Bekanntmachung des Hinweises auf die Patenterteilung: **24.04.2013**
(21) Anmeldenummer: 08802254.6
(22) Anmeldetag: 16.09.2008
(51) Int. Cl.: F15B 13/04, F15B 13/043

(54) **VORGESTEUERTER WEGESCHIEBER, INSBESONDERE ZUR STEUERUNG EINES STELLZYLINDERS EINER TURBOMASCHINE**
PILOT-OPERATED DIRECTIONAL CONTROL VALVE, PARTICULARLY FOR CONTROLLING AN ACTUATING CYLINDER OF A TURBO ENGINE
VANNE DE DISTRIBUTION À COMMANDE PILOTE, DESTINÉE EN PARTICULIER À COMMANDER UN VÉRIN DE COMMANDE D'UNE TURBOMACHINE

(30) Priorität: 09.11.2007 DE 102007053877
(43) Veröffentlichungstag der Anmeldung: 28.07.2010
(73) Patentinhaber: Voith Patent GmbH, 89522 Heidenheim (DE)
(72) Erfinder: LINDOERFER, Steffen, 74575 Schrozberg (DE); OCHS, Lothar, 89564 Nattheim (DE)
(74) Vertreter: Dr. Weitzel & Partner
(86) Internationale Anmeldenummer: PCT/EP2008/007724
(87) Internationale Veröffentlichungsnummer: WO 2009/059658

(56) Entgegenhaltungen:
- DE-A1- 2 830 332

## Beschreibung

Die vorliegende Erfindung betrifft einen Wegeschieber zur Steuerung von Arbeitszylindern oder Servomotoren, insbesondere zur Steuerung eines Stellzylinders einer Turbomaschine, wie beispielsweise einer Gas- oder Dampfturbine, wobei ein Steuerkolben (Pilotkolben) des Wegeschiebers mit einem kraftgeregelten Magneten verschoben wird und so den Strömungsquerschnitt zwischen Hydraulikanschlüssen variiert beziehungsweise wahlweise Verbindungen zwischen verschiedenen Anschlusspaarungen herstellt.

Die Offenlegungsschrift DE 28 30 332 beschreibt eine elektrohydraulische Ventileinheit mit einem Proportionalservoventil, einem mit diesem gekuppelten Richtungssteuerventil zum Steuern eines Arbeitszylinders, und einem elektromechanischen Wandler zum Erzeugen einer von dem elektrischen Eingangssignal linear abhängigen Kraft zum Verstellen des Servoventils, wobei das Richtungssteuerventil eine Ventilspindel aufweist, und die Ventilspindel des Richtungssteuerventils über eine Feder mit der Ventilspindel des Servoventils gekuppelt ist. Auf der anderen Seite der Ventilspindel des Servoventils greift eine zweite Feder an, die der ersten Feder entgegengerichtet wirkt, wobei die Federkonstante der zweiten Feder größer ist als die der ersten Feder. Der elektromechanische Wandler ist dabei als Elektromagnet ausgebildet.

Die Verwendung von Wegeschiebem zur Steuerung beziehungsweise Positionsregelung von Arbeitszylindern ist bekannt. Für einfachwirkende Zylinder werden beispielsweise 3/3-Wegeschieber mit Federrückstellung und für doppeltwirkende Zylinder 4/3-Wegeschieber mit Federrückstellung verwendet. Diese weisen jeweils einen Steuerkolben auf, der über einen Elektromagneten betätigt wird. Der Elektromagnet drückt den Steuerkolben gegen eine Feder und verbindet dadurch einen Druckanschluss P mit einem Verbraucheranschluss beziehungsweise einem von zwei Verbraucheranschlüssen A, B, um druckbeaufschlagtes Hydraulikmedium über den jeweiligen Anschluss in eine vorbestimmte Kammer des Verbrauchers zu leiten. Beispielsweise ist bei doppelwirkenden Arbeitszylindern der Verbraucheranschluss A mit einer ersten Zylinderkammer des Arbeitszylinders verbunden, und der Verbraucheranschluss B ist mit einer zweiten, durch einen Zylinderkolben von der ersten Zylinderkammer getrennten Zylinderkammer verbunden. Je nachdem, in welche der beiden Zylinderkammern druckbeaufschlagtes Hydraulikmedium aus einer hydraulischen Druckversorgung über den Wegeschieber eingeleitet werden soll, wird eine am Kolben des Arbeitszylinders angeschlossene Kolbenstange ein- oder ausgefahren.

Bei solchen doppeltwirkenden Zylindern ist der 4/3-Wegeschieber in der Regel derart ausgeführt, dass immer dann, wenn der erste Verbraucheranschluss A und somit die erste Zylinderkammer des Arbeitszylinders mit dem Druckanschluss P verbunden ist, der zweite Verbraucheranschluss B und damit die zweite Zylinderkammer des Arbeitszylinders mit einem Tankanschluss T des Wegeschiebers verbunden ist oder umgekehrt. Der Tankanschluss T ist durch einen vergleichsweise niedrigen Hydraulikdruck gekennzeichnet, so dass aus der mit dem Tankanschluss T verbundenen Zylinderkammer Hydraulikmedium ausgleitet und zu einem Hydrauliktank geführt wird.

Je nachdem, ob und wie weit der Steuerkolben des Wegeschiebers mittels des Elektromagneten entgegen der Druckkraft der Rückstellfeder verschoben wird, wird entweder der erste Verbraucheranschluss A mit dem Druckanschluss P oder der zweite Verbraucheranschluss B mit dem Druckanschluss P und der jeweils andere Verbraucheranschluss mit dem Tankanschluss T verbunden. Somit strömt Hydraulikmedium entweder auf die eine oder die andere Seite des Kolbens des Arbeitszylinders und das Ein- beziehungsweise Ausfahren des Kolbens beziehungsweise einer an dem Kolben angeschlossenen Kolbenstange des Arbeitszylinders wird gesteuert.

Um den Kolben mit seiner Stange an einer Stelle zu positionieren, bedarf es eines geschlossenen Regelkreises. Hierzu ist am Arbeitszylinder eine Wegemessvorrichtung, auch als Wegaufnehmer bezeichnet, vorgesehen, deren Messsignal an eine im Elektromagneten des Wegeschiebers integrierte Regelelektronik zurückgeführt wird. Diese Regelelektronik vergleicht den Messwert mit dem Sollwert und berechnet aus der Differenz für den Magneten eine neue Stellgröße. Die Kraft des Magneten nimmt daraufhin entsprechend zu oder ab und verschiebt den Steuerkolben in die notwendige Richtung, um die Lage des Kolbens des Arbeitszylinders zu korrigieren. Der Steuerkolben des Wegeschiebers ist dabei kraftschlüssig mit dem Magnetanker des Elektromagneten, das heißt jenem Teil des Magneten, der durch Variieren der Regelspannung beziehungsweise der Regelstromstärke aus dem Magneten ein- oder ausgefahren wird, verbunden, und die Verstellbewegung des Steuerkolbens erfolgt direkt durch den Magnetanker, das heißt beide Bauteile - Magnetanker und Steuerkolben - bewegen sich stets gemeinsam in Verschieberichtung des Steuerkolbens.

Der Strömungsquerschnitt zwischen dem Verbraucheranschluss A, B und dem Druckanschluss P beziehungsweise dem Tankanschluss T wird durch einen Ringspalt bestimmt, den der Steuerkolben mit einem Steuergehäuse, in welchem er in Axialrichtung verschiebbar angeordnet ist, begrenzt. Da der Hub des Elektromagneten begrenzt ist, sind die Strömungsquerschnitte, die ein herkömmlicher Wegeschieber öffnen und schließen kann, begrenzt. Auch der Durchmesser des Steuerkolbens kann nicht beliebig vergrößert werden, um dadurch die Strömungsquerschnitte zu erweitern, da sich dadurch seine Masse vergrößert und er in Verbindung mit einer Feder dynamisch im geschlossenen Regelkreis durch den Magneten nicht mehr exakt zu positionieren wäre. Insbesondere die auftretenden Massenkräfte, Eigenfrequenzen, Reibkräfte und Schwingungen sind als problematisch anzusehen.

Um Wegeschieber zur Steuerung von Stellzylindern von Turbomaschinen trotz der genannten Problematik mit einem größeren Steuerkolbendurchmesser zur Vergrößerung der Strömungsquerschnitte im Wegeschieber verwenden zu können, gibt es zum einen die Möglichkeit, den verwendeten Elektromagneten größer und stärker auszuführen. Dies würde jedoch zugleich zu höheren Induktivitäten und größeren Ankermassen führen, was sich nachteilig auf die Dynamik, den notwendigen Bauraum und die Kosten des Wegeschiebers auswirken würde.

Eine andere Konstruktion sieht vor, zusätzliche Wegemessvorrichtungen beziehungsweise Wegaufnehmer vorzusehen, mittels welchen die Position des Steuerkolbens gemessen wird und das Messsignal auf die Regelelektronik des Elektromagneten zurückgeführt wird. Bei diesen Ausführungen ist eine Vergrößerung des Magneten zwar nicht erforderlich. Nachteilig ist jedoch die Empfindlichkeit des Wegaufnehmers gegenüber Temperatur- und Schwingungseinflüssen. Insbesondere bei der Verwendung eines solchen Wegeschiebers zur Steuerung beziehungsweise Regelung eines Stellzylinders von Dampfturbinen oder Gasturbinen führen die hohen Umgebungstemperaturen des Wegaufnehmers, die durch das Medium Gas oder Dampf verursacht werden, das hinsichtlich seiner Strömungsmenge variiert werden soll, zu kurzen Wartungsintervallen und gegebenenfalls zu einem vergleichsweise frühen Ausfall des Wegeschiebers.

Der vorliegenden Erfindung liegt die Aufgabe zugrunde, einen Wegeschieber anzugeben, der gegenüber den bekannten Ausführungsformen verbessert ist. Insbesondere soll der erfindungsgemäße Wegeschieber die Kolbenstange eines vergleichsweise großen Arbeitszylinders (einfach- oder doppelwirkend) schnell und exakt positionieren können und die entsprechend notwendigen großen Durchflussmengen durch den Wegeschieber präzise und sicher beherrschen. Schließlich soll der Wegeschieber kostengünstig herstellbar sein und eine lange Lebenszeit aufweisen.

Die erfindungsgemäße Aufgabe wird durch einen Wegeschieber mit den Merkmalen von Anspruch 1 gelöst. Die abhängigen Ansprüche beschreiben besonders vorteilhafte Ausführungsformen der Erfindung.

Ein erfindungsgemäßer Wegeschieber zur Steuerung von Arbeitszylindern, Servomotoren oder dergleichen, insbesondere zur Steuerung eines Stellzylinders einer Turbomaschine, wie Gas- oder Dampfturbine, weist neben einem kraftgeregelten Magneten, in der Regel Elektromagneten, eine Hydraulikeinheit auf, welche ein Steuergehäuse, in welchem ein Steuerkolben - vorliegend Pilotkolben genannt - in Axialrichtung des Wegeschiebers verschiebbar angeordnet ist, umfasst. Das Steuergehäuse weist wenigstens drei Hydraulikanschlüsse auf, beispielsweise genau drei Hydraulikanschlüsse, um einen 3/3-Wegeschieber auszubilden, oder vier Hydraulikanschlüsse, um einen 4/3-Wegeschieber auszubilden, nämlich einen Druckanschluss P, einen Verbraucheranschluss A und/oder B und einen Tankanschluss T. Der Druckanschluss P ist zur Verbindung mit einer hydraulischen Druckversorgung und der Tankanschluss T zur Verbindung mit einem Hydrauliktank bestimmt. Der oder die Verbraucheranschlüsse A, B sind zur Verbindung mit einem Verbraucher, hier dem Arbeitszylinder oder dem Servomotor, bestimmt.

Der Strömungsquerschnitt zwischen den Hydraulikanschlüssen A, B, P, T wird durch Verschieben des Pilotkolbens variiert, wie dies in der Beschreibungseinleitung dargestellt worden ist.

Erfindungsgemäß ist zu der Hydraulikeinheit jedoch eine zusätzliche Stelleinheit vorgesehen, welche zum einen den kraftgeregelten Magneten sowie einen zusätzlichen Steuerkolben umfasst, der in dem Steuergehäuse oder in einem am Steuergehäuse angeschlossenen Flansch verschiebbar angeordnet ist. Der Begriff Flansch bezeichnet dabei jede geeignete Bauform eines zusätzlichen Gehäuses oder einer Aufnahmevorrichtung, die integral mit dem Steuergehäuse ausgeführt sein kann oder, in der Regel kraft- und formschlüssig, an diesem angeschlossen sein kann. Der Steuerkolben ist dem kraftgeregelten Magneten derart zugeordnet, insbesondere an einem Magnetanker desselben abgestützt oder kraft- und/oder formschlüssig mit diesem verbunden, dass der Steuerkolben durch den kraftgeregelten Magneten in Abhängigkeit der Ansteuerung des Magneten verschoben wird. In der Regel wird das Ansteuern des als Elektromagneten ausgebildeten Magneten mit einer größeren Spannung oder einer größeren Stromstärke den Magnetanker weiter ausfahren, insbesondere gegen die Kraft eines elastischen Elementes, beispielsweise einer Druckfeder, und damit den Steuerkolben in eine Richtung weg vom Magneten drücken. Bei einer kleineren Steuerspannung beziehungsweise einer kleineren Steuerstromstärke fährt der Magnetanker entsprechend ein, insbesondere durch die Kraft des elastischen Elementes beziehungsweise der Druckfeder.

Die zusätzliche Stelleinheit weist einen Stelleinheitdruckanschluss p, einen Stelleinheittankanschluss t und einen Stellkolbenanschluss a auf. Der Stelleinheitsdruckanschluss p kann insbesondere mit einer separaten, gegenüber dem Druckanschluss P beziehungsweise der Druckversorgung des Steuergehäuses getrennten Druckversorgung verbunden werden und ist somit vor Druckeinbrüchen durch mögliche große Volumenströme durch die Hydraulikeinheit geschütz.

Der Stelleinheittankanschluss t kann mit dem Hydrauliktank, welcher der Hydraulikeinheit zugeordnet ist, oder mit einem zusätzlichen Hydrauliktank verbunden werden.

Die Stelleinheit weist erfindungsgemäß ferner einen Stellkolben auf, der ebenfalls in Axialrichtung des Wegeschiebers, das heißt in derselben Richtung wie der Pilotkolben der Hydraulikeinheit verschiebbar in einem Kolbenraum ist und kraftschlüssig und/oder formschlüssig mit dem Pilotkolben verbunden ist. Der Stellkolben unterteilt den Kolbenraum in zwei zueinander abgedichtete Kolbenraumkammern, so dass in der ersten Kolbenraumkammer ein höherer oder niedrigerer Druck als in der zweiten Kolbenraumkammer eingestellt werden kann. Die erste Kolbenraumkammer ist hydraulisch leitend mit dem Stellkolbenanschluss a verbunden, beispielsweise über Bohrungen, insbesondere Bohrungen in Axialrichtung in einem Gehäuse oder Zylinder, in welchem der Stellkolben verschiebbar getragen wird. Die zweite Kolbenraumkammer kann beispielsweise in ständiger hydraulisch leitender Verbindung mit dem Stelleinheittankanschluss t stehen, könnte jedoch auch luftgefüllt sein und/oder mit der Umgebung des Wegeschiebers verbunden sein. Andere Verbindungen sind möglich.

Der Stellkolben ist ferner über ein erstes elastisches Element, insbesondere eine Druckfeder, vorliegend Messfeder genannt, das entgegen der hydraulischen Druckkraft in der ersten Kolbenraumkammer wirkt, mit dem Steuerkolben verbunden, insbesondere formschlüssig und/oder kraftschlüssig, oder zumindest an diesem abgestützt, und über ein zweites elastisches Element, das ebenfalls entgegen der hydraulischen Druckkraft in der ersten Kolbenraumkammer wirkt, beispielsweise ebenfalls in Form einer Druckfeder - vorliegend Rückstellfeder genannt - mit dem Steuergehäuse oder dem Flansch verbunden, wiederum vorteilhaft formschlüssig und/oder kraftschlüssig oder zumindest an einem von beiden abgestützt. Die Messfeder kann somit das zuvor beschriebene Einfahren des Magnetankers bei vergleichsweise kleineren Spannungen und/oder Stromstärken des Elektromagneten bewirken.

Das erste elastische Element, insbesondere die Messfeder, weist vorteilhaft eine andere Federkraft auf als das zweite elastische Element, insbesondere die Rückstellfeder. In der Regel wird das erste elastische Element - Messfeder - eine kleinere Federkraft aufweisen als das zweite elastische Element - Rückstellfeder.

Wenn Druckfedern als elastische Elemente vorgesehen sind, sind diese in der Regel in der zweiten Kolbenraumkammer angeordnet. Natürlich ist es auch möglich, anstelle von Druckfedern, insbesondere anstelle der Rückstellfeder eine oder mehrere Zugfedern vorzusehen, die dann vorteilhaft in der ersten Kolbenraumkammer oder außerhalb der Kolbenraumkammern angeordnet sind/ist.

Die Messfeder ist vorteilhaft mit einem kleineren Außendurchmesser ausgeführt als die Rückstellfeder und kann somit radial innerhalb der Rückstellfeder platzsparend positioniert werden. Die Rückstellfeder umschließt die Messfeder dann in Umfangsrichtung. Beide Federn können in etwa dieselbe axiale Länge und/oder im Wesentlichen dieselbe Windungszahl aufweisen.

Ein erfindungsgemäßer Aktuator, der einen Arbeitszylinder, insbesondere in Form eines Stellzylinders einer Turbomaschine umfasst, weist ferner einen Wegeschieber der beschriebenen Art auf, welcher über Hydraulikleitungen zur Steuerung oder Regelung der Position des ein- und ausfahrbaren Kolbens beziehungsweise der Kolbenstange des Arbeitszylinders mit dem Arbeitszylinder verbunden ist. An dem Arbeitszylinder kann, wie bekannt, eine Wegemessvorrichtung angeschlossen sein, welche die Position und/oder den zurückgelegten Weg des Kolbens beziehungsweise der Kolbenstange des Arbeitszylinders erfasst und mit einer Regeleinheit, insbesondere in dem kraftgeregelten Magneten integriert, verbunden ist, um in Abhängigkeit der Messergebnisse die Betätigung des Steuerkolbens und damit des Stellkolbens und Pilotkolbens über den Magneten zu regeln. Der Wegeschieber selbst kann frei von jeglicher Messvorrichtung sein, welche die Bewegung oder die Position eines der Kolben oder an diesen angeschlossener Bauteile misst.

Die Erfindung soll nachfolgend anhand eines Ausführungsbeispiels exemplarisch beschrieben werden. Es zeigen:
- Figur 1: eine mögliche Ausführungsform eines erfindungsgemäß ausgeführten Wegeschiebers;
- Figur 2: einen aus der Figur 1 vergrößert dargestellten Ausschnitt der zusätzlichen Stelleinheit.

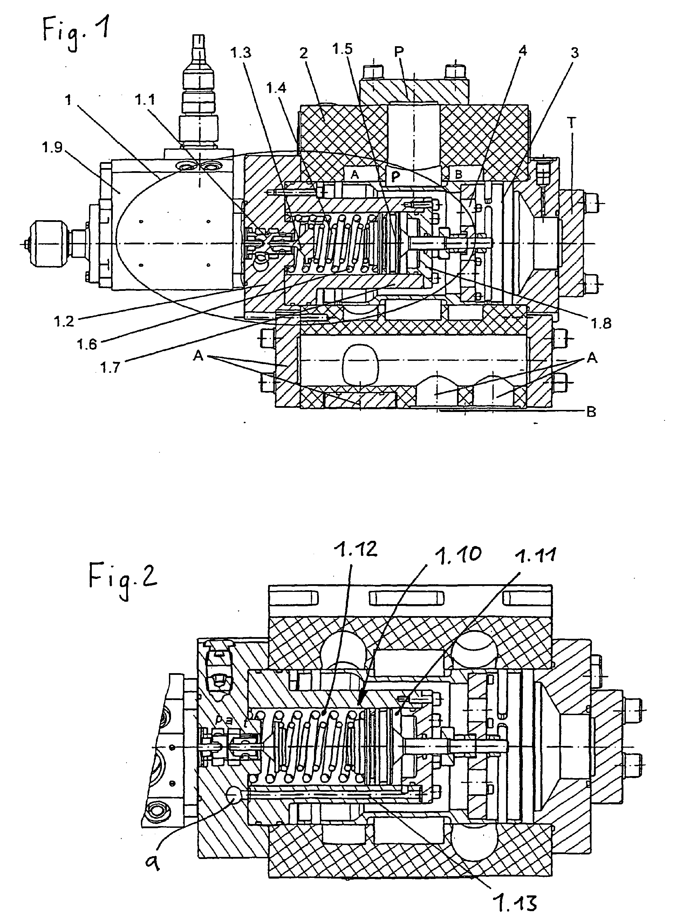

In der Figur 1 erkennt man die Hydraulikeinheit, welche durch das Steuergehäuse 2 mit dem darin in Axialrichtung verschiebbaren Pilotkolben 3 gebildet wird. Das Steuergehäuse 2 weist vier Hydraulikanschlüsse auf, nämlich einen Druckanschluss P, einen ersten Verbraucheranschluss A, einen zweiten Verbraucheranschluss B und einen Tankanschluss T. Die Anschlüsse werden wie eingangs dargestellt mit einer hydraulischen Druckversorgung, den beiden Zylinderkammern des Arbeitszylinders und einem Hydrauliktank verbunden.

Der Pilotkolben 3 weist einen vergleichsweise großen Durchmesser auf, und der vergleichsweise große Querschnitt der verschiedenen Hydraulikanschlüsse A, B, P, T, von denen der Druckanschluss P und die beiden Verbraucheranschlüsse A, B mit ringförmigen Kammern im Steuergehäuse 2 verbunden sind, ermöglicht große Volumenströme durch den Wegeschieber. Die genannten drei ringförmigen Kammern, die von dem Steuergehäuse 2 zusammen mit dem Pilotkolben 3 gebildet beziehungsweise begrenzt werden, können die einzigen ringförmigen Kammern der Hydraulikeinheit beziehungsweise des Steuergehäuses 2 sein.

Der Pilotkolben 3 weist in Radialrichtung verlaufende Bohrungen oder Schlitze auf, welche in Abhängigkeit der axialen Position des Pilotkolbens 3 im Steuergehäuse 2 ein Abströmen von Hydraulikmedium aus dem ersten Verbraucheranschluss A beziehungsweise dem zweiten Verbraucheranschluss B zum Tankanschluss T ermöglichen, indem sie mit diesem strömungsleitend verbunden sind, wobei der Tankanschluss T bei der gezeigten Ausführungsform in Axialrichtung des Wegeschiebers an einem stirnseitigen Ende desselben ausgeführt ist.

Die Radialbohrungen beziehungsweise Radialschlitze im Pilotkolben 3 ermöglichen somit das Leiten von Hydraulikmedium ins Innere des Pilotkolbens 3 und von dort zum Tankanschluss T.

Angetrieben wird der Wegeschieber von einer separaten Stelleinheit 1, welche ein 3/3-Wegeventil mit axial dazu angeordnetem einfachwirkenden Stellkolben 1.5 mit Federrückstellung umfasst. Das 3/3-Wegeventil wird durch einen Steuerkolben 1.1 gebildet, der verschiebbar - hier ebenfalls in Axialrichtung des Wegeschiebers - innerhalb eines Flansches 1.2 angeordnet ist und mit dem Flansch 1.2 einen Stelleinheitdruckanschluss p, einen Stellkolbenanschluss a und einen Stelleinheittankanschluss t ausbildet, siehe insbesondere die Figur 2. Der Stelleinheitdruckanschluss p ist an einer separaten Druckversorgung angeschlossen und somit vor Druckeinbrüchen durch große Volumenströme in der Hydraulikeinheit geschützt.

Der Steuerkolben 1.1, welcher direkt mit dem Magnetanker des kraftgeregelten Magneten 1.9 verbunden ist, ist in einer zentralen zylinderförmigen Bohrung des Flansches 1.2 aufgenommen. In die Bohrung sind zwei ringförmige Einstiche eingearbeitet, welche zusammen mit dem Steuerkolben 1.1 eine erste Kammer bilden, die mit dem Stelleinheitdruckanschluss p hydraulisch leitend verbunden ist und in welcher somit der Hydraulikdruck des Druckanschlusses herrscht, und eine zweite Kammer bilden, die mit dem Stellkolbenanschluss a hydraulikmediumleitend verbunden ist.

Die Strömungsverbindung zwischen der mit dem Stellkolbenanschluss a verbundenen Ringkammer und dem Stelleinheittankanschluss t wird über radiale Bohrungen im Steuerkolben 1.1 hergestellt. Von dort strömt das Hydraulikmedium weiter in einen Einbauraum von zwei Druckfedern - Messfeder 1.4 und Rückstellfeder 1.6 -, welche einen Stellkolben 1.5 druckbeaufschlagen, was im Nachfolgenden noch im Einzelnen beschrieben wird, und schließlich zurück in den Flansch 1.2 zum Stelleinheittankanschluss t. Der Stelleinheitdruckanschluss p kann in derselben axialen Ebene des Flansches 1.2 angeschlossen werden.

Im Flansch 1.2 - und vorliegend zugleich im Steuergehäuse 2 - ist ein Zylinder 1.7 eingesetzt, in welchem der Stellkolben 1.5 in Axialrichtung des Wegeschiebers verschiebbar und gegenüber der inneren Oberfläche des Zylinders 1.7 abgedichtet, beispielsweise über eine Dichtung oder ein Führungsband, gleitend angeordnet ist. Der Stellkolben 1.5 unterteilt einen durch den Zylinder 1.7 in Umfangsrichtung und an einem axialen Ende begrenzten und an dem entgegengesetzten axialen Ende durch den Flansch 1.2 begrenzten Kolbenraum 1.10 in eine erste Kolbenraumkammer 1.11 und eine zweite Kolbenraumkammer 1.12. Die erste Kolbenraumkammer 1.11 ist über Bohrungen 1.13, welche in Axialrichtung in die Wand des Zylinders 1.7 eingebracht sind, mit dem Stellkolbenanschluss a hydraulikmediumleitend verbunden. Die zweite Kolbenraumkammer 1.12 bildet den mit dem Stelleinheittankanschluss t verbundenen Einbauraum für die Messfeder 1.4 und die Rückstellfeder 1.6.

Die Rückstellfeder 1.6 ist zwischen dem Flansch 1.2 und dem Stellkolben 1.5 eingespannt. Die Messfeder 1.4 weist einen kleineren Durchmesser als die Rückstellfeder 1.6 auf und kann deshalb platzsparend im Inneren der Rückstellfeder 1.6 angeordnet werden. Sie stützt sich mit ihrem ersten axialen Ende über die Stange 1.3 auf dem Steuerkolben 1.1 und mit ihrem anderen, entgegengesetzten Ende ebenfalls am Stellkolben 1.5 ab. Die Messfeder 1.4 schiebt in Ruhelage den Steuerkolben 1.1 in Richtung des Magneten 1.9 gegen einen Sicherungsring und hält so den Verbund aus Messfeder 1.4, Stange 1.3 und Steuerkolben 1.1 stets zentrisch und definiert am Anschlag.

Die Ankupplung der Stelleinheit 1 beziehungsweise des Stellkolbens 1.5 an den Pilotkolben 3 des "großen Wegeschiebers" (der Hydraulikeinheit) erfolgt kraft- und formschlüssig. Dabei ist das schlanke Ende des Stellkolbens 1.5 in einen Pilotkolbenboden, hier in Form einer Scheibe 4, eingepasst und ist mit diesem mittels mehrerer Sechskantmuttern verschraubt. Selbstverständlich kommen auch andere Verbindungen in Betracht. Hierzu reicht das schlanke Ende des Stellkolbens 1.5, das ebenfalls als Kolbenstange bezeichnet werden kann, durch den Zylinderdeckel 1.8, der bei der gezeigten Ausführungsform stirnseitig am Zylinder 1.7 aufgeschraubt ist und die genannte axiale Begrenzung des Kolbenraumes 1.10 beziehungsweise der ersten Kolbenraumkammer 1:11 bildet. Diese Kolbenstange wird zugleich durch den Zylinderdeckel 1.8 geführt und ist gegenüber diesem, beispielsweise mit einem eingesetzten Dichtring, abgedichtet.

Der Magnet 1.9 ist beispielsweise an dem Flansch 1.2, wie dargestellt, stirnseitig angeschraubt und sein Anker drückt mit seiner Stößelstange ins Zentrum des Steuerkolbens 1.1 und bewegt den Steuerkolben 1.1 in Richtung des Stellkolbens 1.5 beziehungsweise des Pilotkolbens 3. Der kraftgeregelte Magnet 1.9 umfasst vorteilhaft die Regelelektronik für den Pilotantrieb (Stelleinheit 1) und für einen an dem Wegeschieber angeschlossenen Arbeitszylinder (nicht dargestellt), und ist insbesondere mit einer Wegemessvorrichtung des Letzteren verschaltet, wie eingangs dargestellt. Die Regelelektronik kann analog oder digital ausgeführt werden und hinsichtlich der Regelstrecke auf die Größe des zu steuernden Arbeitszylinders angepasst sein.

Bei der dargestellten Ausführung sind der Steuerkolben 1.1, der Stellkolben 1.5 und der Pilotkolben 3 somit in Axialrichtung konzentrisch hintereinander und fluchtend zueinander angeordnet. Auch der Flansch 1.2, der Zylinder 1.7 und das Steuergehäuse 2 sind konzentrisch zu der gemeinsamen Längsachse der verschiedenen Kolben angeordnet.

Nachfolgend soll das mit dem dargestellten Wegeschieber erfindungsgemäß ausgeführte Steuerverfahren beschrieben werden.

Nach Vorgabe eines Positionssollwertes für den Arbeitszylinder (nicht dargestellt) mittel eines am Magneten 1.9, der als Elektromagnet ausgeführt ist, angelegten Stromes, insbesondere zwischen 4 und 20 Milliampere, erfährt der Regler sofort eine Regelabweichung. Die Regelelektronik berechnet daraus einen Magnetkraftsollwert als Stellgröße. Die sich verändernde Magnetkraft hat zur Folge, dass der Magnetanker ausgelenkt wird und den Steuerkolben 1.1 nach rechts gegen die Messfeder 1.4 drückt. Dabei öffnet das 3/3-Wegeventil, das durch den Steuerkolben 1.1 zusammen mit dem Flansch 1.2 gebildet wird, und gibt den Durchgang des mit dem Stelleinheitdruckanschluss p verbundenen Raumes und dem mit dem Stellkolbenanschluss a verbundenen Raumes frei. Anker und Steuerkolben 1.1 bewegen sich so weit in Richtung des Stellkolbens 1.5 beziehungsweise Pilotkolbens 3, bis die Magnetkraft und die Messfederkraft im Gleichgewicht sind. Es wird somit eine Federwaage gebildet. Der Stellkolben 1.5 bewegt sich aufgrund der Druckbeaufschlagung der ersten Kolbenraumkammer 1.11 mit dem Versorgungsdruck über die Verbindung der beiden genannten Kammern (p zu a) in Richtung des Steuerkolbens 1.1 beziehungsweise weg von dem Pilotkolben 3 (man beachte trotzdem die formschlüssige Verbindung zwischen diesen beiden Kolben) und drückt die Messfeder 1.4 weiter zusammen, und zwar so lange, bis diese mit ihrer Kraft den Durchgang beziehungsweise Strömungsquerschnitt zwischen den beiden Kammern, die mit dem Stelleinheitdruckanschluss p beziehungsweise dem Stellkolbenanschluss a verbunden sind, wieder schließt und das System im Gleichgewicht hält. Dieser Gleichgewichtszustand kann als hydraulische Mitte bezeichnet werden.

Aufgrund des starren Anschlusses des Stellkolbens 1.5 an dem Pilotkolben 3 macht dieser die Bewegung des Stellkolbens 1.5 mit und regelt entsprechend den Strömungsquerschnitt zwischen den Hydraulikanschlüssen A, B, P und T des Steuergehäuses 2 der Hydraulikeinheit.

Ist umgekehrt eine Bewegung des Arbeitszylinderkolbens (nicht dargestellt) und hierfür des Pilotkolbens 3 in die andere Richtung notwendig, so wird die Magnetkraft reduziert, der Steuerkolben 1.1 bewegt sich in Richtung weg von dem Stellkolben 5 beziehungsweise dem Pilotkolben 3 und hin zu dem Magneten 1.9 und gibt den Durchgang (Strömungsquerschnitt) zwischen der mit dem Stellkolbenanschluss a verbunden Kammer und dem Stelleinheittankanschluss t frei. Das Hydraulikmedium, insbesondere Öl, wird durch Expandieren der Rückstellfeder 1.6 aus dem Zylinder 1.7, nämlich der ersten Kolbenraumkammer 1.11 gedrückt. Der Stellkolben 1.5 bewegt sich in Richtung weg von dem Steuerkolben 1.1 (in der gezeigten Darstellung nach rechts) und entspannt die Messfeder 1.4. Diese entspannt sich genau so weit, bis die vorhandene Magnetkraft den Steurkolben 1.1 nach rechts drückt und das Abströmen des Hydraulikmediums aus der ersten Kolbenraumkammer 1.11 über den Stellkolbenanschluss a und den Stelleinheittankanschluss t zum Hydrauliktank (nicht dargestellt) beendet. Die Magnetkraft und die Messfederkraft sind wieder im Gleichgewicht.

Die Magnetkraftänderung und die Hubänderung des Stellkolbens 1.5 und damit des Pilotkolbens 3 sind proportional zueinander. Einer Magnetkraftänderung ist daher immer eine eindeutige Position des Stellkolbens 1.5 und damit des Pilotkolbens 3 zugeordnet.

Im Magnetfeld des kraftgeregelten Magneten 1.9 kann ein elektrischer Leiter zur Messung der magnetischen Flussdichte über eine in dem Leiter induzierte Hall-Spannung angeordnet sein. Dieser Leiter (nicht dargestellt) kann derart mit dem Magneten 1.9 beziehungsweise der Regelelektronik für den Magneten 1.9 verbunden sein, dass über eine Rückführung der Hall-Spannung die Magnetkraft geregelt wird. Somit können nur durch Veränderung der Magnetkraft der Stellkolben 1.5 und der damit fest verbundene Pilotkolben 3 exakt positioniert werden.

Die zur Positionierung der Kolbenstange eines großen Arbeitszylinders nötige Regelbewegung des Pilotkolbens 3 kann mittels des erfindungsgemäß ausgeführten Wegeschiebers ideal durchgeführt werden. Eine Wegmessung des Stellkolbens 1.5 beziehungsweise des Pilotkolbens 3 ist nicht notwendig. Auf ein wärmeempfindliches und ausfallanfälliges Wegemesssystem im oder am Wegeschieber kann deshalb verzichtet werden. Vorteilhaft ist nur ein Wegemesssystem am Arbeitszylinder vorgesehen.

## Patentansprüche

1. Wegeschieber zur Steuerung von Arbeitszylindern oder Servomotoren, insbesondere eines Stellzylinders einer Turbomaschine wie Gas- und Dampfturbine;
1.1 mit einem kraftgeregelten Magneten (1.9) und
1.2 mit einer Hydraulikeinheit, umfassend ein Steuergehäuse (2), in welchem ein Pilotkolben (3) in Axialrichtung des Wegeschiebers verschiebbar angeordnet ist, wobei
1.3 das Steuergehäuse (2) wenigstens drei Hydraulikanschlüsse aufweist, nämlich einen Druckanschluss (P) zur Verbindung mit einer hydraulischen Druckversorgung, einen Verbraucheranschluss (A, B) zur Verbindung mit dem Arbeitszylinder oder Servomotor und einen Tankanschluss (T) zur Verbindung mit einem Hydrauliktank; und
1.4 der Strömungsquerschnitt zwischen den Hydraulikanschlüssen (A, B, P, T) durch Verschieben des Pilotkolbens (3) variierbar ist;
1.5 mit einer zusätzlichen Stelleinheit (1), welche den kraftgeregelten Magneten (1.9) sowie einen zusätzlichen, in dem Steuergehäuse (2) oder in einem am Steuergehäuse (2) angeschossene Flansch (1.2) verschiebbaren Steuerkolben (1.1) umfasst, der mittels des kraftgeregelten Magneten (1.9) verschiebbar ist und welcher den Strömungsquerschnitt zwischen einem Stelleinheitdruckanschluss (p), einem Stellkolbenanschluss (a) und einem Stelleinheittankanschluss (t) durch Verschieben variiert; wobei
1.6 die Stelleinheit (1) ferner einen Stellkolben (1.5) umfasst, der ebenfalls in Axialrichtung des Wegeschiebers verschiebbar am Pilotkolben (3) kraft- und/oder formschlüssig angeschlossen ist, und einen Kolbenraum (1.10) in zwei zueinander abgedichtete Kolbenraumkammern (1.11, 1.12) unterteilt, von denen die erste (1.11) hydraulisch leitend mit dem Stellkolbenanschluss (a) verbunden ist, und
1.7 der Stellkolben (1.5) über ein erstes elastisches Element des Wegeschiebers, das entgegen der hydraulischen Druckkraft in der ersten Kolbenraumkammer (1.11) wirkt, mit dem Steuerkolben (1.1) verbunden oder an diesem abgestützt ist, und über ein zweites elastisches Element des Wegeschiebers, das entgegen der hydraulischen Druckkraft in der ersten Kolbenraumkammer (1.11) wirkt, mit dem Steuergehäuse (2) oder dem Flansch (1.2) verbunden oder an diesem abgestützt ist;
**dadurch gekennzeichnet, dass**
1.8 der Wegeschieber zur exakten Positionierung des Pilotkolbens einen Leiter umfasst, und der Leiter im Magnetfeld des kraftgeregelten Magneten (1.9), der als Elektromagnet für eine elektrische Ansteuerung ausgeführt ist (3), angeordnet ist, und er Leiter ferner derart mit dem Magneten (1.9) oder einer Regeleinheit des Wegeschiebers für den Magneten (1.9) verbunden ist, dass die Magnetkraft und damit die Position des Steuerkolbens (1.1), des Stellkolbens (1.5) und des Pilotkolbens (3) über die in dem Leiter erzeugte Hall-Spannung geregelt wird

2. Wegeschieber gemäß Anspruch 1, **dadurch gekennzeichnet, dass** das erste elastische Element als Druckelement, insbesondere als Druckfeder, ausgeführt ist, welches/welche in der zweiten Kolbenraumkammer (1.12) positioniert ist, und/oder das zweite elastische Element als Druckelement, insbesondere als Druckfeder, ausgeführt ist, welches/welche in der zweiten Kolbenraumkammer (1.12) positioniert ist.

3. Wegeschieber gemäß Anspruch 2, **dadurch gekennzeichnet, dass** das erste elastische Element, insbesondere die Messfeder (1.4), eine andere, insbesondere kleinere, Federsteifigkeit aufweist, als das zweite elastische Element, insbesondere die Rückstellfeder (1.6).

4. Wegeschieber gemäß einem der Ansprüche 2 oder 3, **dadurch gekennzeichnet, dass** die Messfeder (1.4) einen kleineren Durchmesser aufweist als die Rückstellfeder (1.6) und auf ihrer Außenseite von der Rückstellfeder (1.6) in Umfangsrichtung umschlossen wird.

5. Wegeschieber gemäß einem der Ansprüche 1 bis 4, **dadurch gekennzeichnet, dass** der Steuerkolben (1.1) ebenfalls in Axialrichtung des Wegeschiebers verschiebbar ist, und der Pilotkolben (3), der Steuerkolben (1.1) sowie der Stellkolben (1.5) insbesondere in Axialrichtung konzentrisch hintereinander und fluchtend zueinander angeordnet sind.

6. Wegeschieber gemäß einem der Ansprüche 1 bis 5, **dadurch gekennzeichnet, dass** der Wegeschieber frei von einer Wegemessvorrichtung ist, welche die Position einer der Kolben (3, 1.1, 1.5) oder von an diesen angeschlossenen Bauteilen misst.

7. Wegeschieber gemäß einem der Ansprüche 1 bis 6, **dadurch gekennzeichnet, dass** der Steuerkolben (1.1) in einer zylindrischen Bohrung des Flansches (1.2) gleitbar angeordnet ist.

8. Wegeschieber gemäß einem der Ansprüche 1 bis 7, **dadurch gekennzeichnet, dass** der Stellkolben (1.5) innerhalb eines im Steuergehäuse (2) und/oder im Flansch (1.2) eingesetzten oder einteilig mit diesem ausgebildeten Zylinder (1.7) gleitbar angeordnet ist, welcher die beiden Kolbenraumkammern (1.11, 1.12) in Umfangsrichtung und/oder einseitig oder beidseitig in Axialrichtung begrenzt, und in dem Zylinder (1.7) insbesondere die hydraulisch leitende Verbindung zwischen dem Stellkolbenanschluss (a) und der ersten Kolbenraumkammer (1.11) in Form einer oder mehrerer Bohrungen (1.13) ausgeführt ist.

9. Wegeschieber gemäß einem der Ansprüche 1 bis 8, **dadurch gekennzeichnet, dass** der Stelleinheitdruckanschluss (p) gegenüber dem Druckanschluss (P) hydraulisch und druckdicht abgedichtet ist.

10. Aktuator, umfassend einen Arbeitszylinder, insbesondere in Form eines Stellzylinders von einer Turbomaschine, und einen Wegeschieber, welcher über Hydraulikleitungen zur Regelung der Position eines aus- und einfahrbaren Kolbens des Arbeitszylinders mit dem Arbeitszylinder verbunden ist, **dadurch gekennzeichnet, dass** der Wegeschieber gemäß einem der Ansprüche 1 bis 9 ausgeführt ist.

11. Aktuator gemäß Anspruch 10, **dadurch gekennzeichnet, dass** am Arbeitszylinder eine Wegemessvorrichtung des Aktuators angeschlossen ist, welche die Position und/oder den zurückgelegten Weg des Kolbens des Arbeitszylinders erfasst, und eine Regeleinheit des Aktuators vorgesehen ist, welche dem kraftgeregelten Magneten (1.9) in Abhängigkeit der Messergebnisse, insbesondere in Form einer elektrischen Spannung, der Wegemessvorrichtung regelt.

## Claims

1. A directional control valve for controlling working cylinders or servomotors, in particular an actuating cylinder of a turbo-machine such as gas and steam turbines;
1.1 having a force-regulated magnet (1.9) and
1.2 having a hydraulic unit, comprising a control housing (2), in which a pilot piston (3) is situated so it is displaceable in the axial direction of the directional control valve,
1.3 the control housing (2) having at least three hydraulic connections, namely a first pressure connection (P) for the connection to a hydraulic pressure supply, a consumer connection (A, B) for the connection to the working cylinder or servomotor, and a tank connection (T) for the connection to a hydraulic tank; and
1.4 the flow cross-section between the hydraulic connections (A, B, P, T) being variable by displacement of the pilot piston (3);
1.5 having an additional actuating unit (1) is provided, which comprises the force-regulated magnet (1.9) and an additional control piston (1.1), which is displaceable in the control housing (2) or in a flange (1.2) attached on the control housing (2), and which is displaceable using a force-regulated magnet (1.9) and which varies the flow cross-section between an actuating unit pressure connection (p), an actuating piston connection (a), and an actuating unit tank connection (t) by displacement;
1.6 the actuating unit (1) also comprising an actuating piston (1.5), which is also non-positively and/or positively connected on the pilot piston (3) so it is displaceable in the axial direction of the directional control valve, and divides a piston room (1.10) into two piston room chambers (1.11, 1.12) which are sealed to one another, of which the first chamber (1.11) is hydraulically connected to the actuating piston connection (a), and
1.7 the actuating piston (1.5) being connected via a first elastic element, which acts against the hydraulic pressure force in the first piston room chamber (1.11), to the control piston (1.1) or being supported thereon, and being connected via a second elastic element, which acts against the hydraulic pressure force in the first piston room chamber (1.11), to the control housing (2) or the flange (1.2) or being supported thereon
**characterized in that**
1.8 the directional control valve comprises a conductor for the exact positioning of a conductor, and the conductor is situated in the magnetic field of the force-regulated magnet (1.9), which is implemented as an electromagnet for an electrical activation (3), and the conductor is further connected to the magnet (1.9) or a control unit for the contorl magnet (1.9) in such a matter that the magnetic force and thus the position of the control piston (1.1), the actuating piston (1.5), and the pilot piston (3) are regulated via the Hall voltage generated in the conductor.

2. The directional control valve according to Claim 1, **characterized in that** the first elastic element is implemented as a pressure element, in particular as a compression spring (measuring spring 1.4), which is positioned in the second piston room chamber (1.12), and/or the second elastic element is implemented as a pressure element, in particular as a compression spring (restoring spring 1.6), which is positioned in the second piston room chamber (1.12).

3. The directional control valve according to Claim 2, **characterized in that** the first elastic element, in particular the measuring spring (1.4), has a different, in particular lesser spring force than the second elastic element, in particular the restoring spring (1.6).

4. The directional control valve according to one of Claims 2 or 3, **characterized in that** the measuring spring (1.4) has a smaller diameter than the restoring spring (1.6) and is enclosed in the peripheral direction on its outer side by the restoring spring (1.6).

5. The directional control valve according to one of Claims 1 through 4, **characterized in that** the control piston (1.1) is also displaceable in the axial direction of the directional control valve, and the pilot piston (3), the control piston (1.1), and the actuating piston (1.5) are situated concentrically one behind another and aligned with one another in particular in the axial direction.

6. The directional control valve according to one of Claims 1 through 5, **characterized in that** the directional control valve is free of a position measuring device, which measures the position of one of the pistons (3, 1.1, 1.5) or of components connected thereto.

7. The directional control valve according to one of Claims 1 through 6, **characterized in that** the control piston (1.1) is situated so it can slide in a cylindrical hole of the flange (1.2).

8. The directional control valve according to one of Claims 1 through 7, **characterized in that** the actuating piston (1.5) is situated so it can slide inside a cylinder (1.7), which is inserted into the control housing (2) and/or in the flange (1.2) or is implemented in one piece therewith, and which delimits the two piston room chambers (1.11, 1.12) in the peripheral direction and/or on one side or both sides in the axial direction, and in particular the hydraulic connection between the actuating piston connection (a) and the first piston room chamber (1.11) is implemented in the cylinder (1.7) in the form of one or more holes (1.13).

9. The directional control valve according to one of Claims 1 through 8, **characterized in that** the actuating unit pressure connection (p) is sealed hydraulically and pressure-tight with respect to the pressure connection (P).

10. An actuator, comprising a working cylinder, in particular the form of an actuating cylinder of a turbo-machine, and a directional control valve, which is connected to the working cylinder via hydraulic lines for controlling or regulating the position of an extendable and retractable piston of the working cylinder, **characterized in that** the directional control valve is implemented according to one of Claims 1 through 9.

11. The actuator according to Claim 10, **characterized in that** a position measuring device is connected to the working cylinder, which acquires the position and/or the covered distance of the piston of the working cylinder, and a control unit is provided, which regulates the force-regulated magnet (1.9) as a function of the measurement results, in particular in the form of an electrical voltage, of the position measuring device.

## Revendications

1. Distributeur à tiroir pour commander des cylindres de travail ou des servomoteurs, en particulier un cylindre support de machine turbo comme une turbine à gaz ou à vapeur;
1.1 pourvu d'un aimant à régulation forcée (1.9) et
1.2 d'un groupe hydraulique, comprenant un boîtier de commande (2), dans lequel un piston pilote (3) est disposé pour coulisser dans la direction axiale du distributeur à tiroir, dans lequel
1.3 le boîtier de commande (2) comprend au moins trois raccords hydrauliques, à savoir un raccord de pression (P) pour se connecter à une alimentation de pression hydraulique, un raccord de travail (A, B) pour se connecter au cylindre de travail ou servomoteur et un raccord de réservoir (T) pour se connecter à un réservoir hydraulique; et
1.4 la section d'écoulement est variable entre les raccords hydrauliques (A, B, P, T) en faisant coulisser le piston pilote (3);
1.5 disposant d'un groupe de réglage supplémentaire (1), comprenant l'aimant à régulation forcée (1.9) de même qu'un piston de commande (1.1) supplémentaire mobile dans le boîtier de commande (2) ou dans une bride (1.2) connectée au boîtier de commande (2), piston mobile à l'aide de l'aimant à régulation forcée (1.9) et modifiant la section d'écoulement entre un raccord de pression pour groupe de réglage (p), un raccord pour piston de réglage (a) et un raccord pour réservoir de groupe de réglage (t) par un mouvement de coulisse; dans lequel
1.6 le groupe de réglage (1) comporte en outre un piston de réglage (1.5), également mobile dans la direction axiale du distributeur à tiroir et connecté au piston pilote (3) par liaison de force et/ou par engagement positif, et un compartiment à piston (1.10) scindé en deux chambres de compartiment à piston (1.11, 1.12) étanches l'une par rapport à l'autre, dont la première (1.11) est reliée de manière conductrice hydrauliquement avec le raccord pour piston de réglage (a) et
1.7 le piston de réglage (1.5) est relié au piston de commande (1.1) par le biais d'un premier élément élastique du distributeur à tiroir s'opposant à la force de pression hydraulique dans la première chambre de compartiment à piston (1.11), ou s'appuie sur celui-ci, et relié au boîtier de commande (2) ou à la bride (1.2) par le biais d'un second élément élastique du distributeur à tiroir s'opposant à la force de pression hydraulique dans la première chambre de compartiment à piston (1.11), ou s'appuie sur celui-ci,
**caractérisé en ce que**
1.8 que le distributeur à tiroir comprend un conducteur pour assurer le positionnement précis du piston pilote, et le conducteur est diposé dans le champ magnétique de l'aimant à régulation forcée (1.9), qui est conçu comme électroaimant pour fournir une commande électrique (3), et le conducteur est de plus connecté à l'aimant (1.9) ou bien un groupe de régulation du distributeur à tiroir pour l'aimant (1.9), **en ce que** la force magnétique et donc la position du piston de commande (1.1), du piston de réglage (1.5) et du piston pilote (3) est régulée par la tension de Hall produite dans le conducteur.

2. Distributeur à tiroir selon la revendication 1, **caractérisé en ce que** le premier élément élastique est conçu comme élément de pression, en particulier comme ressort à pression, qui est positionné dans la seconde chambre de compartiment à piston (1.12) et/ou que le second élément élastique est conçu comme élément de pression, en particulier comme ressort à pression, qui est positionné dans la seconde chambre de compartiment à piston (1.12).

3. Distributeur à tiroir selon la revendication 2, **caractérisé en ce que** le premier élément élastique, en particulier le ressort de mesure (1.4) présente une autre résistance élastique, en particulier plus petite, que le second élément élastique, en particulier le ressort de rappel (1.6).

4. Distributeur à tiroir selon l'une des revendications 2 ou 3, **caractérisé en ce que** le ressort de mesure (1.4) présente un diamètre plus petit que le ressort de rappel (1.6) et est entouré dans le sens de la circonférence sur son côté externe par le ressort de rappel (1.6).

5. Distributeur à tiroir selon l'une des revendications 1 à 4, **caractérisé en ce que** le piston de commande (1.1) est également mobile dans la direction axiale du distributeur à tiroir, et le piston pilote (3), le piston de commande (1.1) de même que le piston de réglage (1.5) sont disposés l'un derrière l'autre concentriquement dans la direction axiale en particulier, et alignés l'un par rapport à l'autre.

6. Distributeur à tiroir selon l'une des revendications 1 à 5, **caractérisé en ce que** le distributeur à tiroir ne comporte pas de dispositif de mesure de distance pour mesurer la position de l'un des pistons (3, 1.1, 1.5) ou de l'un des composants connectés à celui-ci.

7. Distributeur à tiroir selon l'une des revendications 1 à 6, **caractérisé en ce que** le piston de commande (1.1) est disposé de manière coulissante dans un alésage cylindrique de la bride (1.2).

8. Distributeur à tiroir selon l'une des revendications 1 à 7, **caractérisé en ce que** le piston de réglage (1.5) est disposé de manière coulissante à l'intérieur d'un cylindre (1.7) introduit dans le boîtier de commande (2) et/ou dans la bride (1.2) ou formé d'un seul tenant avec cet élément, qui limite les deux chambres de compartiment à piston (1.11, 1.12) dans le sens de la circonférence et/ou dans la direction axiale d'un seul côté ou des deux côtés, et la liaison hydrauliquement conductrice entre le raccord pour piston de réglage (a) et la première chambre de compartiment à piston (1.11) est conçue dans le cylindre (1.7) en particulier sous forme d'un ou de plusieurs alésages (1.13).

9. Distributeur à tiroir selon l'une des revendications 1 à 8, **caractérisé en ce que** le raccord de pression pour groupe de réglage (p) est étanche hydrauliquement et à la pression par rapport au raccord de pression (P).

10. Actionneur, comprenant un cylindre de travail, en particulier sous forme de cylindre support d'une machine turbo, et un distributeur à tiroir, qui est relié au cylindre de travail par le bais de conduites hydrauliques pour réguler la position d'un piston du cylindre de travail susceptible de sortir et de rentrer, **caractérisé en ce que** le distributeur à tiroir est conçu selon l'une des revendications 1 à 9.

11. Actionneur selon la revendication 10, **caractérisé en ce qu'**un dispositif de mesure de distance de l'actionneur est connecté au cylindre de travail, qui détermine la position et/ou la course parcourue par le piston du cylindre de travail, et un groupe de régulation de l'actionneur est prévu, pour réguler l'aimant à régulation forcée (1.9) en fonction des résultats de mesure, en particulier sous forme de tension électrique, du dispositif de mesure de distance.
